# EUROPEAN PATENT APPLICATION

(11) **EP 3 742 541 A1**
(43) Date of publication of application: **25.11.2020**
(21) Application number: 19175633.7
(22) Date of filing: 21.05.2019
(51) Int. Cl.: H01M 10/625, H01M 10/6553, H01M 10/6567, H01M 10/613, H01M 10/615, H01M 10/6569, H01M 2/10

(54) **THERMAL MANAGEMENT SYSTEM FOR BATTERY CELLS**

(71) Applicant: 3M Innovative Properties Company, Saint Paul, MN 55133-3427 (US)
(72) Inventor: Hoffmann, Dirk, 45659 Recklinghausen (DE)
(74) Representative: Mössner, Brigitte

(57) **Abstract**

Thermal management system (1) for cooling or heating a large-format battery cell (20) of a traction battery of an electric vehicle, comprising
a) a dielectric heat transfer liquid (80);
b) a large-format battery cell (20), its electrical terminals being arranged in a terminal portion (60), and having a terminal-free portion (70), arranged opposite to the terminal portion (60). The terminal portion is immersed in the heat transfer liquid (80) to transport heat away from or to the battery cell.

The battery cell is oriented such that, when the vehicle is travelling, the terminal portion is arranged lower than the terminal-free portion.

## Description

This disclosure relates to systems for heating or cooling battery cells via immersion in a heat transfer liquid, in particular battery cells of traction batteries in electric vehicles. It also relates to electrical vehicles comprising such systems.

Electric vehicles are propelled by electrical power electro-chemically stored in battery packs, each of them consisting of a number of battery modules. Each battery module, in turn, is made up of a number of battery cells, electrically connected in series or parallel to deliver the desired voltage and current.

A battery cell is an electro-chemical battery cell, i.e. the smallest electrical unit in a battery system to chemically store electrical energy. Generally, battery cells should be operated within a certain temperature interval, e.g. 20°C to 60°C, for highest efficiency and longest lifetime. However, battery cells generate considerable heat when being quickly charged, e.g. during fast-charging, or quickly discharged, e.g. when fully accelerating the vehicle. To keep the battery cells in their optimum temperature interval, this heat must be removed from the battery cells within short time. When rapidly discharging or fast-charging battery cells, such as so-called prismatic cells, cylindrical cells or so-called pouch cells, the electrical terminals of the cells heat up more than the body of the cells.

In a cold environment, e.g. after a cold winter night, the battery cells may be too cold to deliver the desired current, or they may risk being damaged by being discharged heavily while cold. To keep the battery cells operational when they are cold and to reduce the risk of damage, the cells should be heated before they are discharged.

Most battery cells are installed in an upright position with the electrical terminals being at the top. While certain traditional battery systems are designed to cool the bottom of the battery cells via a cooled plate thermally coupled to the bottom of the cells by a thermal interface material, more advanced battery systems use liquid immersion cooling to cool side walls of cells.

Few battery cooling systems are designed to cool the terminal portion of battery cells where most heat is dissipated. For example, the European patent application EP 2602859 A1 claims a method for cooling a battery in which a conductive connector is connected to an electrode terminal of the cell, and a coolant is brought into contact with the connector to cool the battery cell.

Immersion of at least a portion of a battery cell allows for effective heat transfer from the cell (i.e. cooling) or to the cell (i.e. heating). The international patent application WO 2010/053689 A2 mentions a temperature-controlled battery configuration which includes a case with a liquid inlet and lithium-ion cell packs in the case. The casing is flooded with a thermally-conductive, electrically insulating fluid flowing under the cell packs, upwardly across the cell packs, and through an outlet.

In most traditional immersion cooling systems, a major portion of the battery cells was immersed in the heat transfer liquid, so that a rather large quantity of liquid was required. In many of those systems the terminal portion was not immersed in the liquid, resulting in less effective cooling of the cell. The present disclosure attempts to address these shortcomings.

The present disclosure provides a thermal management system for cooling or heating a battery cell of a traction battery of an electric vehicle, the system comprising
a) a dielectric heat transfer liquid;
b) a battery cell, comprising i) a terminal portion comprising a positive electrical terminal and a negative electrical terminal of the battery cell, and ii) a terminal-free portion, arranged opposite to the terminal portion;
wherein, in a design orientation of the battery cell, the battery cell is oriented such that the terminal portion is arranged lower, measured along the direction of gravity, than the terminal-free portion, and such that the terminal portion is immersed in the heat transfer liquid to transport heat away from or to the battery cell.

Where battery cells have their positive and negative electrical terminals in one terminal portion (e.g. on one side of the cell), the orientation of the cell such that the terminal portion is lower than the terminal-free portion, in combination with the use of a dielectric heat transfer liquid facilitates immersion cooling of the terminal portion where the cell dissipates more heat than in other portions. For heating, immersion of the electrical terminals in heat transfer liquid of sufficiently high temperature is considered an effective way of heating the cell. The dielectric thermal transfer liquid prevents short-circuits between terminals. Gravity forces the thermal transfer liquid towards the bottom, where the terminal portion is, and thereby makes mechanisms for pumping the thermal transfer liquid towards the terminal portion obsolete. The fact that the terminal portion of the cell, where most heat is dissipated, is immersed in heat transfer liquid may make it unnecessary to immerse other portions of the cell in the heat transfer liquid. The terminal-free portion of the cell may thus not have to be immersed, so that a smaller quantity of the heat transfer liquid is required for effective temperature control of the cell. This may save weight and may make the thermal management system more cost-effective.

A battery cell is the smallest energy-storing unit of a traction battery, it comprises a cathode, an anode, an electrolyte and a separator. The positive and the negative electrical terminals of a battery cell are electrically connected to the cathode and the anode, respectively. A battery module consists of a plurality of battery cells connected in series and/or parallel, encased in a battery module housing. A battery pack is assembled by connecting multiple battery modules together in series or parallel with sensors and controllers including battery management systems and thermal management systems.

The term "electric vehicle" in this disclosure refers equally to hybrid-electric vehicles, to plug-in electric vehicles and to purely electric vehicles. Electric vehicles include electrically propelled road vehicles, such as passenger cars, buses, motorbikes, and trucks.

A large-format battery cell, as used herein, is a battery cell that has a geometric volume of eight (8) cubic centimetres (cm³) or more. In certain embodiments of the present disclosure the battery cell is a large-format battery cell having a geometric volume of eight cubic centimetres (cm³) or more, of 15 cm³ or more, or of 25 cm³ or more. The present disclosure can be used with large-format battery cells that have both electrical terminals in a terminal portion, e.g. on one side, of the cell. Such large-format cells typically provide an advantageous, high ratio of active battery volume (electrolyte, cathode, anode, separator) to inactive volume (housing).

Large-format battery cells include large-format pouch cells, large-format cylindrical cells and large-format prismatic cells, all for use in traction batteries of electric vehicles. A prismatic battery cell is a cell that is delimited by a rigid housing formed by flat surface portions. A pouch cell is delimited by a flexible housing forming a flat pouch. A cylindrical cell is a cell that is delimited by a cylindrical rigid housing.

Cylindrical battery cells which have their terminals on opposite sides are not considered to have a terminal portion comprising the positive and the negative electrical terminals and an opposed terminal-free portion.

In certain embodiments of the present disclosure, the battery cell is a pouch cell, a cylindrical cell or a prismatic cell. In certain of these embodiments, the battery cell is a lithium-ion pouch cell, a lithium-ion cylindrical cell or a lithium-ion prismatic cell. Such cells are particularly cost-effective to manufacture and provide adequate power output for traction batteries of electric vehicles.

A terminal portion of a battery cell is the portion of the cell which comprises the positive terminal and the negative terminal of the cell. The terminal portion may further comprise a portion of the outer surface of the cell from which the terminals protrude. For a prismatic cell, where both terminals protrude from one flat surface portion of the housing, the terminal portion comprises the surface portion from which the terminals protrude. For a pouch cell, where both terminals protrude from one end of the pouch, the terminal portion comprises the portion of the outer surface of the pouch from which the terminals protrude. The terminal portion may comprise the terminals and up to 10%, up to 20% or up to 50% of the geometric volume of the cell. The terminal portion may comprise the terminals and up to 10%, up to 20% or up to 50% of the outer surface of the cell.

A terminal-free portion of a battery cell is a portion of the cell which is free of electrical terminals of the cell. Where the cell has an elongated shape comprising first and opposed second end portion, and where both electrical terminals are arranged at the first end portion and no electrical terminals are arranged at the second end portion, the first end portion is the terminal portion, and the second end portion is the terminal-free portion. Where both terminals are arranged on a first geometrical half of the cell (also referred to as "on a first side of the cell"), and no terminals are arranged on the remaining second geometrical half, this first half of the cell is, or comprises, the terminal portion, and the remaining geometrical half is, or comprises, the terminal-free portion.

In an elongated battery cell the geometric length of the cell, i.e. the cell extension in elongation direction, is greater than its width or height, i.e. its extensions in directions orthogonal to the elongation direction. In certain embodiments of the present disclosure the battery cell has an elongated shape defining a first end portion and an opposed second end portion, and the terminal portion is comprised in the first end portion and the terminal-free portion is comprised in the second end portion. Elongated battery cells with their terminal portion arranged at an end portion can be cooled or heated with a smaller amount of heat transfer liquid.

A cell in which the positive terminal is arranged opposite the negative terminal is not considered to have a terminal-free portion, in the context of this disclosure.

According to the present disclosure, the battery cell is oriented such that in a design orientation the terminal portion is arranged lower, as measured in the direction of gravity, than the terminal-free portion. Where both terminals protrude from a bottom surface of the cell, the terminal portion is arranged lower, as measured in the direction of gravity, than the terminal-free portion. In a prismatic cell, where both terminals protrude from one flat bottom surface portion of the housing, the terminal portion is arranged lower, as measured in the direction of gravity, than the terminal-free portion. In a pouch cell, where both terminals protrude from a bottom end of the pouch, the terminal portion is arranged lower, as measured in the direction of gravity, than the terminal-free portion.

The thermal management system described herein may take various different geometric orientations during its assembly or during testing or shipping. The expression "design orientation" of an element of an electric vehicle herein refers to a geometric orientation of the element (e.g. of the thermal management system, or of a battery cell) which the element is intended to have when the electric vehicle is in use, i.e. when the vehicle is operational and travelling on a horizontal surface. The design orientation refers specifically to a vertical orientation or an "up-down" orientation or a tilt orientation. The design orientation is determined relative to the gravity vector and is thus independent from the direction in which the element is oriented horizontally and in which the vehicle is travelling on the horizontal surface, as a horizontal surface by definition extends orthogonally to the gravity vector.

In certain embodiments, the design orientation of the battery cell is a geometric orientation of the battery cell which the battery cell is intended to have when the electric vehicle is in use, i.e. when the vehicle is operational and travelling on a horizontal surface.

In certain embodiments, the design orientation of the thermal management system is a geometric orientation of the thermal management system which the thermal management system is intended to have when the electric vehicle is in use, i.e. when the vehicle is operational and travelling on a horizontal surface.

The term "lower" has its normal meaning herein and refers to an element, in the design orientation of the thermal management system, being closer, measured along the direction of gravity, to a horizontal surface on which the vehicle is travelling in use than another element. An element being lower than another is independent of the positions of the elements in a direction parallel to the horizontal surface ("lateral direction").

In certain embodiments the terminal portion is arranged not only lower than, but below, i.e. underneath, the terminal-free portion, that is, with no lateral offset. In certain embodiments, in the design orientation the battery cell is oriented such that the terminal portion is arranged underneath, measured along the direction of gravity, the terminal-free portion. This orientation may result in the terminal portion being arranged at the lowest point of the cell, so that less heat transfer liquid is required to immerse the terminal portion in the heat transfer liquid.

In a design orientation of the battery cell and of the thermal management system the battery cell is oriented such that the terminal portion is immersed in the heat transfer liquid. In certain embodiments, the positive electrical terminal and the negative electrical terminal are immersed in the heat transfer liquid to transport heat away from, or to, the electrical terminals. This may be advantageous in that the terminals may be used both for conducting electricity and for conducting heat out of the cell (cooling) or into the cell (heating). Using the terminal portion and specifically the terminals to transport heat into the cell or out of the cell is an efficient way to thermally-manage the battery cell.

Immersion cooling of the battery cell is most effective at the terminal portion of the cell, because the terminal portion generally dissipates more heat than the terminal-free portion. Where it is important to minimize the amount of thermal transfer liquid, it may be advantageous to immersion cool and/or heat only the terminal portion of the battery cell, and potentially the terminal portions of all battery cells in a battery module, and not immersion cool and/or heat at least a part of the terminal-free portion of the battery cell(s). Independent of the actual shape of the battery cell, the amount of heat transfer liquid may be chosen such that a lower fraction of the battery cell is immersed in the heat transfer liquid, and the remaining fraction of the cell is not immersed in the heat transfer liquid. "Lower" refers to the direction of gravity when the cell is in its design orientation.

Therefore, in certain embodiments, at least a part of the terminal-free portion is not immersed in the heat transfer liquid.

The heat transfer liquid is a dielectric liquid, i.e. an electrically non-conductive liquid. Because it is non-conductive, the liquid may be in contact with both a positive electrical terminal and a negative terminal without creating a risk of an electrical short between the terminals. Hence dielectric heat transfer liquids are particularly advantageous to use in thermal management systems described herein.

As used herein, the term "dielectric heat transfer liquid" refers to a heat transfer liquid that has a volume resistivity of 10⁶ Ohm-cm or higher at 25°C. In certain embodiments the dielectric heat transfer liquid has a volume resistivity of 10⁸ Ohm-cm or more at 25°C, or a volume resistivity of 10¹¹ Ohm-cm or more at 25°C. Such dielectric heat transfer liquids provide a higher degree of protection against electrical discharges between terminals and may be suitable for traction batteries running at higher voltages.

In certain embodiments the thermal management system described herein is a single-phase system, in which the heat transfer liquid remains liquid for an entire cooling/heating cycle: the liquid absorbs/releases heat when in contact with the terminal portion of the cell, then moves in its liquid state towards a cooling/heating element (e.g. fins of a heat exchanger) and contacts the cooling element to transfer heat to/from the cooling element, then moves back to the battery cell to absorb/release heat again, and so on.

Heat transfer liquids suitable for such a single-phase thermal management system need to remain liquid over the entire range of battery operating temperatures. For common traction battery types, the operational temperature range is the range between -50°C and +100°C, often between -40°C and +80°C, at a pressure of 1013 hPa. The heat transfer liquid is chosen such as to remain liquid within one of these temperature ranges. Under specific, milder conditions, the requirements on the heat transfer liquid may be less demanding, so that it may be sufficient for it to remain liquid at temperatures between -10° and +60°C, or between +15°C and +45°C, at a pressure of 1013 hectopascal (hPa).

Hence in certain embodiments the heat transfer liquid is liquid at -50°C and at +100°C at a pressure of 1013 hPa. In other embodiments the heat transfer liquid is liquid at -40°C and at +80°C at a pressure of 1013 hPa. In other embodiments the heat transfer liquid is liquid at +10°C and at +60°C at a pressure of 1013 hPa or at +15°C and at +45°C at a pressure of 1013 hPa.

In such single-phase thermal management systems, it is desirable that the heat transfer liquid not evaporate but remain liquid even at higher temperatures. This may facilitate the liquid being heated to temperatures well above the operational temperature range of the cell, in order to get the cell temperature back into that operational range by circulating the heat transfer liquid. Hence in certain embodiments the dielectric heat transfer liquid has a boiling point of 90°C or higher, measured at a pressure of 1013 hectopascal.

In other embodiments the thermal management system described herein is a two-phase heating system, in which the heat transfer liquid evaporates when absorbing heat from the battery cell and liquifies when releasing the heat at a cooling element. The heat transfer liquid thus does not remain liquid for an entire cooling cycle: the liquid absorbs heat when in contact with the terminal portion of the cell and evaporates and turns into a gas, which moves to a cooling element (e.g. fins of a heat exchanger) contacts the cooling element to transfer heat to the cooling element and thereby liquifies, then moves back in its liquid state back to the battery cell to absorb heat again, and so on.

Heat transfer liquids suitable for such a two-phase thermal management system need to be liquid at the temperature of the cooling element and evaporate at the temperature of the battery cell.

Hence in certain embodiments the heat transfer liquid is liquid at -50°C and gaseous at +100°C, at 1013 hPa. In other embodiments the heat transfer liquid is liquid at -10°C and gaseous at +80°C, at 1013 hPa. In other embodiments the heat transfer liquid is liquid at +10°C and gaseous at +60°C, at 1013 hPa.

In certain embodiments, the heat transfer liquid has a boiling point of 70°C or lower, measured at a pressure of 1013 hectopascal. In certain of these embodiments, the heat transfer liquid has a boiling point of 60°C or lower, measured at a pressure of 1013 hectopascal, and in certain of these embodiments, the heat transfer liquid has a boiling point of 50°C or lower. Such heat transfer liquids may be particularly suitable for two-phase thermal management systems according to the present disclosure, and for certain cell types and for certain power output of the cell.

In specific scenarios, and independent from the thermal management system being a single-phase or a two-phase system, it may be important that the heat transfer liquid be liquid at low temperatures. In a cold night in Finland, for example, temperatures may drop to -40°C. In order to be able to heat a battery cell before starting an electric vehicle it is important that the heat transfer liquid be liquid at such low temperatures so that it can be pumped from the cell to the heating unit for being heated and be pumped back towards the battery cell for heating the cell. Therefore, in certain embodiments of a thermal management system according to the present disclosure, the heat transfer liquid is liquid at a temperature of minus 40°C (-40°C) at a pressure of 1013 hectopascal.

Independent of the heat transfer liquid being usable in a single- or two-phase thermal management system, certain chemical compositions have found to be suitable heat transfer liquids, such as certain fluorinated alkenes, and especially fluorinated hydrocarbons. Some materials of these groups are useful heat transfer liquids due to them being chemically inert and electrically insulating. An example is a liquid comprising methoxytridecafluoroheptene isomer. Hence in certain embodiments of the thermal management system according to the present disclosure the heat transfer liquid is, or comprises, a fluorinated hydrocarbon material, such as a methoxytridecafluoroheptene isomer. A suitable dielectric heat transfer liquid may be chosen from a family of engineered fluids commercially available under the brand name 3M™ Novec™ Engineered Fluids available from 3M Deutschland GmbH, Neuss, Germany. In particular, the variety "Novec™ 7300" is considered a suitable dielectric heat transfer liquid. It has a pour point of minus 38°C, a boiling point of +98°C and a volume resistivity of 10¹¹ Ohm-cm. Therefore. in certain thermal management systems according to the present disclosure, the dielectric heat transfer liquid is, or comprises, 3M™ Novec™ 7300 fluid.

As described above, the heat transfer liquid and the (first) battery cell may be accommodated in a housing of a battery module. The module housing may contain a plurality of further battery cells, identical to the first battery cell and electrically connected with each other, so that all the cells in the module housing electrically form a battery module. These further battery cells may be cooled and heated by the same heat transfer liquid by which the first cell is cooled or heated, so that the battery cells and the heat transfer liquid (and other elements not mentioned here) form a battery module of the traction battery of the electric vehicle. Individual battery cells may be easier to manage electrically and thermally if they are managed jointly in a battery module. The module housing may be, or may comprise, a container for the thermal transfer liquid in which the terminal portions of the battery cells may be immersed. In embodiments where the thermal transfer liquid is circulated between the module housing and a cooling/heating unit, the module housing may have an inlet and an outlet for the thermal transfer liquid.

Hence in certain embodiments the thermal management system of the present disclosure further comprises a battery module housing containing the heat transfer liquid and the battery cell, the module housing optionally comprising an inlet for entry of the heat transfer liquid into the module housing, and optionally comprising an outlet for exit of the heat transfer liquid from the module housing.

In a further aspect the present disclosure also provides an electric vehicle for travelling on a horizontal surface, such as an electric car, comprising a thermal management system as described herein.

The description of the following Figure will now provide more details about particular embodiments of the thermal management system according to the present disclosure:

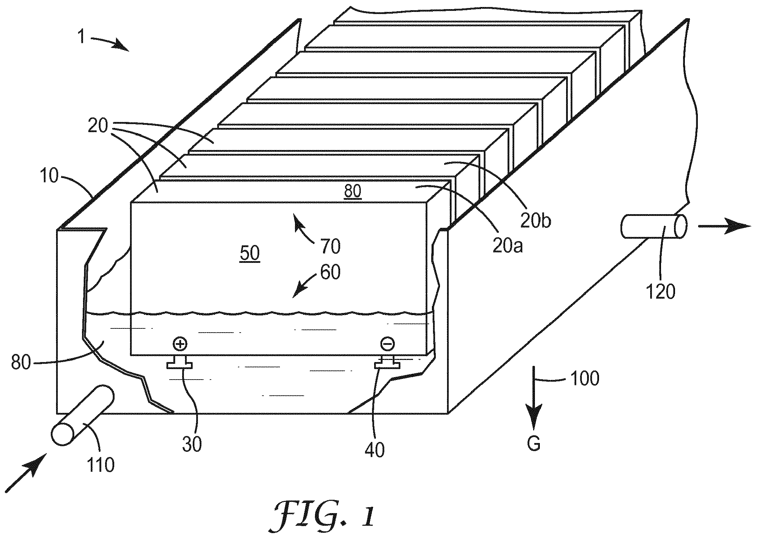

- Fig. 1: Perspective view of a thermal management system according to the present disclosure.

**Figure 1** is a perspective view of a thermal management 1 system according to the present disclosure. A battery module housing 10 contains a number of large-format prismatic battery cells 20, arranged adjacent to each other in a horizontal row, forming a stack of battery cells 20. For clarity, a top cover of the module housing 10 is not shown, and a front wall of the module housing 10 is shown partially cut-out so that the cells 20 are visible. Each cell 20 has a positive electrical terminal 30 and a negative electrical terminal 40 for electrically connecting the cell 20 to other cells 20 and ultimately to an electric motor for propelling an electric vehicle. Busbars connecting the terminals 30, 40 of the foremost cell 20a to terminals 30, 40 of the adjacent cell 20b are not shown. Support structures to keep the cells 20 in a fixed position within the module 20 are not shown, either.

Electrical currents in a battery cell 20 generate heat when the cell 20 is being charged or discharged quickly. The heat is conducted towards the outer surface of each cell, so that the cell housing 50 becomes hot. The terminals 30, 40 are connected to cathode and anode (not shown) of the cell 20, where the current is particularly strong. The terminals 30, 40 and the portion 60 of the cell 20 in which the terminals 30, 40 are arranged (the "terminal portion" 60) are the hottest zones of the cell 20. In Figure 1, the terminal portion 60 of the foremost cell 20a is the bottom portion 60 of the cell 20a. Opposite to the terminal portion 60, the top portion 70 of the cell 20a (and of all cells 20) is free of electrical terminals and is therefore referred to also as a terminal-free portion 70 of a battery cell 20. In the arrangement shown in Figure 1, the terminal-free portion 70 of a battery cell 20 includes its top surface 80.

The battery module housing 10 also contains a heat transfer liquid 80, arranged at the bottom of the module housing 10 by gravity. The direction of gravity G is indicated by arrow 100. The battery cells 20 are arranged such that their terminal portions 60 are at the bottom of the cells 20, below the terminal-free portion 70 at the top, measured along the direction of gravity 100. The terminals 30, 40 and the terminal portion 60 of each cell 20 are immersed in the heat transfer liquid 80, so that the heat transfer liquid 80 can absorb heat from the outer surface of the terminal portion 60 of each cell 20.

The thermal management system 1 is a single-phase system, in which the heat transfer liquid 80 remains in its liquid phase throughout a cooling/heating cycle. The heat transfer liquid 80 is moved through the module housing 10 by pumping: In a heating cycle it enters the module housing 10 via an inlet 110, moves along the surfaces of the terminal portions 60 of the battery cells 20 to pick up heat from the battery cells 20, and the hot liquid 80 exits the module housing 10 at an outlet 120 to be pumped towards a cooling unit (not shown).

For heating the cells 20 to a temperature within the range of 20°C to 60°C, the heat transfer liquid 80 is heated by a heating unit (not shown) outside the module housing 10, is pumped into the module housing 10 via the inlet 110, moves along the surfaces of the terminal portions 60 of the battery cells 20 to deposit heat into the terminal portion 60 to heat the cells 20, and the cooler liquid 80 exits the module housing 10 at outlet 120 to return to the heating unit.

The same thermal management system 1 and the same heat transfer liquid 80 can thus be used for cooling or for heating of battery cells 20 as needed. Whether the thermal management system 1 cools or heats depends on whether a cooling system is operated between outlet 120 and inlet 110, or a heating system is operated between outlet 120 and inlet 110.

The heat transfer liquid 80 is dielectric, i.e. electrically non-conductive. Although the positive terminal 30 and the negative terminal 40 are immersed in the same liquid 80, the dielectric liquid 80 electrically insulates the terminals 30, 40 from each other and thereby prevents electrical discharges between the terminals 30, 40. The voltage between terminals 30, 40 of the same cell 20 is only a few volts, but voltages between terminals 30, 40 of two different cells 20 in a module housing 10 can be a few tens of volts. The heat transfer fluid 80 shown in Figure 1 is an engineered fluid, commercially available under the trade name Novec™ 7300 from 3M Deutschland GmbH, Neuss, Germany, and has a volume resistivity of about 10¹¹ Ohm-cm at 25°C and thereby safely prevents any electrical discharge between terminals 30, 40 or between a terminal 30, 40 and the module housing 10, which is typically held on electrical ground.

The thermal management system 1, the battery module housing 10, the heat transfer fluid 80 and the battery cells 20 are shown in their design orientation, i.e. in an orientation relative to the direction of gravity 100 in which they are intended to be when the electric vehicle, which is propelled by the energy stored in the cells 20, is in use, i.e. when the vehicle is operational and travelling on a horizontal surface.

It is contemplated that a battery module housing 10 and the heat transfer liquid 80 can be used in an alternative thermal management system comprising pouch cells or cylindrical cells instead of the prismatic cells 20. In such an alternative system the electrical terminals 30, 40 of each pouch cell or cylindrical cell would be arranged in a terminal portion which would be arranged lower than (or below) a terminal-free portion on the opposite edge of the pouch cell or cylindrical cell, respectively. In the design orientation, the pouch cells or cylindrical cells would also be oriented such that their terminal portions are immersed in the heat transfer liquid 80.

## Claims

1. Thermal management system (1) for cooling or heating a battery cell (20) of a traction battery of an electric vehicle, the system comprising
a) a dielectric heat transfer liquid (80);
b) a battery cell (20), comprising
i) a terminal portion (60) comprising a positive electrical terminal (30) and a negative electrical terminal (40) of the battery cell,
ii) a terminal-free portion (70), arranged opposite to the terminal portion (60);
wherein, in a design orientation of the battery cell, the battery cell is oriented such that the terminal portion (60) is arranged lower, measured along the direction of gravity (100), than the terminal-free portion (70),
and such that the terminal portion (60) is immersed in the heat transfer liquid (80) to transport heat away from or to the battery cell (20).

2. Thermal management system according to claim 1, wherein the battery cell (20) is a pouch cell, a cylindrical cell or a prismatic cell (20).

3. Thermal management system according to claim 1 or claim 2, wherein the battery cell (20) is a large-format battery cell (20) having a geometric volume of eight cubic centimetres or more.

4. Thermal management system according to any one of the preceding claims, wherein the battery cell (20) has an elongated shape defining a first end portion and an opposed second end portion, and wherein the terminal portion (60) is comprised in the first end portion and the terminal-free portion (70) is comprised in the second end portion.

5. Thermal management system according to any one of the preceding claims, wherein in the design orientation the battery cell (20) is oriented such that the terminal portion (60) is arranged underneath, measured along the direction of gravity (100), the terminal-free portion (70).

6. Thermal management system according to any one of the preceding claims, wherein the positive electrical terminal (30) and the negative electrical terminal (40) are immersed in the heat transfer liquid (80) to transport heat away from, or to, the electrical terminals (30, 40).

7. Thermal management system according to any one of the preceding claims, wherein the dielectric heat transfer liquid (80) has a volume resistivity of 10⁸ Ohm-cm or more at 25°C, or a volume resistivity of 10¹¹ Ohm-cm or more at 25°C.

8. Thermal management system according to any one of the preceding claims, wherein the heat transfer liquid (80) is liquid at a temperature of minus 40°C at a pressure of 1013 hectopascal.

9. Thermal management system according to any one of the preceding claims, wherein the dielectric heat transfer liquid (80) has a boiling point of 90°C or higher, measured at a pressure of 1013 hectopascal.

10. Thermal management system according to any one of claims 1 to 8, wherein the heat transfer liquid (80) has a boiling point of 70°C or lower, measured at a pressure of 1013 hectopascal.

11. Thermal management system according to any one of the preceding claims, wherein the heat transfer liquid (80) is, or comprises, a fluorinated hydrocarbon material, such as a methoxytridecafluoroheptene isomer.

12. Thermal management system according to any one of the preceding claims, wherein the design orientation of the battery cell (20) is a geometric orientation of the battery cell which the battery cell is intended to have when the electric vehicle is operational and travelling on a horizontal surface.

13. Thermal management system according to any one of the preceding claims, further comprising a battery module housing (10) containing the heat transfer liquid (80) and the battery cell (20), the battery module housing optionally comprising an inlet (110) for entry of the heat transfer liquid (80) into the battery module housing (10), and optionally comprising an outlet (120) for exit of the heat transfer liquid (80) from the battery module housing (10).

14. Thermal management system according to any one of the preceding claims, wherein at least a part of the terminal-free portion (70) is not immersed in the heat transfer liquid (80).

15. Electric vehicle for travelling on a horizontal surface, such as an electric car, comprising a thermal management system (1) according to any one of the preceding claims.
